(19) Europäisches Patentamt
European Patent Office
Office européen des brevets

(11) **EP 2 962 753 B1**

(12) **FASCICULE DE BREVET EUROPEEN**

(45) Date de publication et mention
de la délivrance du brevet:
**20.03.2019 Bulletin 2019/12**

(21) Numéro de dépôt: **15305911.8**

(22) Date de dépôt: **12.06.2015**

(51) Int Cl.:
*B01J 23/85* (2006.01)     *B01J 23/882* (2006.01)
*B01J 35/10* (2006.01)     *B01J 35/00* (2006.01)
*B01J 37/02* (2006.01)     *B01J 37/20* (2006.01)
*B01J 21/04* (2006.01)     *B01J 27/185* (2006.01)
*B01J 27/188* (2006.01)     *C10G 45/08* (2006.01)
*B01J 23/652* (2006.01)     *B01J 27/19* (2006.01)

(54) **CATALYSEUR D'HYDROTRAITEMENT À DENSITÉ DE MOLYBDÈNE ÉLEVÉE ET MÉTHODE DE PRÉPARATION**

HYDROTREATING-KATALYSATOR MIT HOHER MOLYBDENDICHTE, UND DESSEN HERSTELLUNGSMETHODE

HYDROTREATING CATALYST WITH HIGH MOLYBDENUM DENSITY AND ITS METHOD OF PREPARATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.07.2014 FR 1456464**

(43) Date de publication de la demande:
**06.01.2016 Bulletin 2016/01**

(73) Titulaire: **IFP Energies nouvelles**
**92500 Rueil-Malmaison (FR)**

(72) Inventeur: **Daudin, Antoine**
**69960 CORBAS (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
EP-A1- 0 483 923          WO-A1-2007/084471
WO-A1-2011/080407          WO-A1-2014/013154
WO-A1-2014/173878          WO-A2-2007/084437
JP-A- 2006 000 726          RU-C1- 2 313 389
US-A- 5 290 429

• CATHERINE MARTIN: "CATALYSEURS D'HYDRODESULFURATION PREPARES A PARTIR D'HETEROPOLYANIONS DE TYPE ANDERSON", INTERNET CITATION, 21 octobre 2003 (2003-10-21), pages 1-186, XP002638548, Extrait de l'Internet: URL:https://iris.univ-lille1.fr/dspace/bit stream/1908/354/2/50376-2003-111-112.pdf [extrait le 2011-05-24]

Remarques:
Le dossier contient des informations techniques présentées postérieurement au dépôt de la demande et ne figurant pas dans le présent fascicule.

EP 2 962 753 B1

## Description

La présente invention concerne un catalyseur d'hydrotraitement et un procédé de préparation dudit catalyseur utile pour l'hydrodésulfuration d'une coupe pétrolière, en particulier une coupe essence.

L'invention se rapporte également à un procédé d'hydrodésulfuration d'une coupe essence mettant en oeuvre un catalyseur selon l'invention.

## Etat de la technique

Le raffinage pétrolier ainsi que la pétrochimie sont maintenant soumis à de nouvelles contraintes. En effet, tous les pays adoptent progressivement des spécifications sévères en soufre, l'objectif étant d'atteindre par exemple 10 ppm (poids) de soufre dans les essences commerciales en Europe et au Japon. Le problème de réduction des teneurs en soufre se concentre essentiellement sur les essences obtenues par craquage, qu'il soit catalytique (FCC Fluid Catalytic Cracking selon la terminologie anglo-saxonne) ou non catalytique (cokéfaction, viscoréduction, vapocraquage), principaux précurseurs de soufre dans les pools essence.

Une solution, bien connue de l'homme du métier, pour réduire la teneur en soufre consiste à effectuer un hydrotraitement (ou hydrodésulfuration) des coupes hydrocarbonées (et notamment des essences de craquage catalytique) en présence d'hydrogène et d'un catalyseur hétérogène. Cependant ce procédé présente l'inconvénient majeur d'entrainer une chute très importante de l'indice d'octane si le catalyseur mis en oeuvre n'est pas assez sélectif. Cette diminution de l'indice d'octane est notamment liée à l'hydrogénation des oléfines présentes dans ce type d'essence de manière concomitante à l'hydrodésulfuration.

Contrairement à d'autres procédés d'hydrotraitement, l'hydrodésulfuration des essences doit donc permettre de répondre à une double contrainte antagoniste : assurer une hydrodésulfuration profonde des essences et limiter l'hydrogénation des composés insaturés présents.

Ainsi, le brevet US 5 318 690 propose un procédé consistant à fractionner l'essence, adoucir la fraction légère et à hydrotraiter la fraction lourde sur un catalyseur conventionnel puis à la traiter sur une zéolithe ZSM5 pour retrouver approximativement l'indice d'octane initial.

La demande de brevet WO 01/40409 revendique le traitement d'une essence de FCC dans des conditions de haute température, faible pression et fort ratio hydrogène/charge. Dans ces conditions particulières, les réactions de recombinaison conduisant à la formation des mercaptans, mettant en jeu l'$H_2S$ formé par la réaction de désulfuration et les oléfines sont minimisées.

Enfin, le brevet US 5 968 346 propose un schéma permettant d'atteindre des teneurs résiduelles en soufre très faibles par un procédé en plusieurs étapes : hydrodésulfuration sur un premier catalyseur, séparation des fractions liquides et gazeuses, et second hydrotraitement sur un deuxième catalyseur. La séparation liquide/gaz permet d'éliminer l'$H_2S$ formé dans le premier réacteur, afin d'aboutir à un meilleur compromis entre hydrodésulfuration et perte octane.

Une autre voie pour répondre à la double problématique mentionnée ci-dessus consiste à employer des catalyseurs d'hydrodésulfuration à la fois actifs en hydrodésulfuration mais également très sélectifs en hydrodésulfuration par rapport à la réaction d'hydrogénation des oléfines.

Ainsi on connait dans l'état de la technique le document US 2009/321320 qui divulgue des catalyseurs d'hydrodésulfuration qui comprennent une phase métallique active au cobalt/molybdène et un support à base d'alumine haute température, c'est-à-dire calcinée à une température supérieure à 800°C, et de surface s pécifique comprise entre 40 et 200 m$^2$/g.

Les catalyseurs sont obtenus par imprégnation à sec d'une solution aqueuse contenant du cobalt, du molybdène et au moins un additif sous forme d'un composé organique.

Le document EP 1892039 décrit des catalyseurs d'hydrodésulfuration sélectifs comprenant au moins un support, au moins un élément du groupe VIII, au moins un élément du groupe VIB et du phosphore dans lequel la densité en éléments du groupe VIB par unité de surface du support est comprise entre 2.10$^{-4}$ et 18.10$^{-4}$ g d'oxydes d'éléments du groupe VIB par m$^2$ de support, dans lequel le rapport molaire phosphore sur élément du groupe VIB est compris entre 0,27 et 2, dans lequel la teneur en éléments du groupe VIB est comprise entre 1 et 20% poids d'oxydes d'éléments du groupe VIB et dans lequel le support a une surface spécifique inférieure à 135 m$^2$/g.

On connaît également des catalyseurs d'hydrotraitement de gazole comprenant un support, au moins un métal du groupe VIB associé à au moins un métal du groupe VIII qui présentent une surface spécifique comprise entre 200 et 300 m$^2$/g et donc une densité en métal du groupe VIB par unité de surface, exprimée en nombre d'atomes de métal du groupe VIB par nm$^2$ de catalyseur, inférieure à 7.

D'autres catalyseurs utilisables pour une désulfuration sélective d'une coupe essence en limitant l'hydrogénation des oléfines sont connus des documents WO 2011/080407 A1, WO 2007/084437 A1 et WO 2014/013154 A1.

Il existe donc encore aujourd'hui un vif intérêt chez les raffineurs pour des catalyseurs d'hydrodésulfuration notamment de coupes essences qui présentent des performances catalytiques améliorées, notamment en termes d'activité catalytique en hydrodésulfuration et/ou de sélectivité et qui ainsi une fois mis en oeuvre permettent de produire une essence à basse teneur en soufre sans réduction sévère de l'indice d'octane.

**Résumé de l'invention**

L'invention concerne donc un catalyseur d'hydrotraitement selon la revendication 1.

De manière préférée, le rapport molaire (métal du groupe VIII)/(métal du groupe VIB) est compris entre 0,1 et 0,8 et le rapport molaire phosphore/(métal du groupe VIB) est compris entre 0,1 et 0,7.

Le catalyseur selon l'invention a de préférence une surface spécifique comprise entre 40 et 95 m$^2$/g et de manière préférée comprise entre 50 et 90 m$^2$/g.

De manière préférée, la densité en métal du groupe VIB est comprise entre 7 et 25 atomes de métal du groupe VIB par nm$^2$ de catalyseur, de préférence comprise entre 7 et 20 atomes de métal du groupe VIB par nm$^2$ de catalyseur, de préférence comprise entre 7 et 15 atomes de métal du groupe VIB par nm$^2$ de catalyseur.

Le métal du groupe VIB est choisi parmi le tungstène et le molybdène et le métal du groupe VIII est choisi parmi le nickel et le cobalt.

Selon un mode de réalisation préféré, le métal du groupe VIB est le molybdène et le métal du groupe VIII est le cobalt.

Dans le cadre de l'invention, le support à base d'alumine du catalyseur est obtenu à partir de gel d'alumine malaxé, mis en forme et calciné.

Selon l'invention, le catalyseur peut comprendre en outre au moins un composé organique contenant de l'oxygène et/ou de l'azote. Le composé organique peut être choisi parmi un acide carboxylique, un alcool, un aldéhyde, un ester, une amine, un acide carboxylique aminé, un alcool aminé, un nitrile et un amide.

Par exemple le composé organique est choisi parmi l'éthylène glycol, le triéthylène glycol, le glycérol, le polyéthylène glycol ayant un poids moléculaire de 150 à 1500, l'acétophénone, le 2,4-pentanedione, le pentanole, l'acide acétique, l'acide maléique, l'acide oxalique, l'acide tartrique, l'acide formique, l'acide citrique, un succinate de dialkyl C1-C4, un oligosaccharide cyclique composé d'au moins 6 unités glucopyrannose liées en α (1-4), l'éthylène diamine, la tétraméthylurée, l'acide aminotriacétique, l'acide 1,2-cyclohexanediaminetétraacétique, la mono-éthanolamine, l'acétonitrile, la N-méthylpyrrolidone, le diméthylformamide et l'acide éthylène diamine tétraacétique.

L'invention concerne également un procédé de préparation du catalyseur selon l'invention, qui comprend les étapes suivantes:

a) on dépose sur un support constitué d'alumine par une ou plusieurs imprégnations les métaux du groupe VIII, du groupe VIB et du phosphore de manière à obtenir un précurseur catalytique imprégné;

b) on sèche le précurseur imprégné à une température inférieure à 200°C sans calcination ultérieure sous air à une température supérieure à 200°C de manière à fournir un catalyseur séché;

c) on sulfure le catalyseur séché à l'étape b).

Le catalyseur selon l'invention lorsqu'il comprend en outre un additif organique, est préparé selon un procédé qui comprend les étapes suivantes:

i) on dépose sur un support constitué d'alumine par une ou plusieurs imprégnations les métaux du groupe VIII, du groupe VIB, du phosphore et au moins un composé organique contenant de l'oxygène et/ou de l'azote de manière à obtenir un précurseur catalytique imprégné;

ii) on sèche le précurseur imprégné à une température inférieure à 200°C sans calcination ultérieure sous air à une température supérieure à 200°C de manière à fournir un catalyseur séché.

Selon l'invention, l'étape i) peut comprendre les étapes successives suivantes:

i1) on imprègne un support d'alumine par au moins une solution contenant au moins un métal du groupe VIB, au moins un métal du groupe VIII et le phosphore pour obtenir un support imprégné,

i2) on sèche le support imprégné obtenu à l'étape i1) à une température inférieure à 200°C sans calcination ultérieure sous air pour obtenir un catalyseur séché,

i3) on imprègne le catalyseur séché obtenu à l'étape i2) par une solution d'imprégnation comprenant au moins un composé organique contenant de l'oxygène et/ou de l'azote pour obtenir un précurseur de catalyseur additivé,

i4) optionnellement on laisse maturer le précurseur de catalyseur additivé obtenu à l'étape i3).

Enfin l'invention a également pour objet un procédé d'hydrodésulfuration d'une coupe essence dans lequel on met en contact ladite coupe essence, de l'hydrogène et un catalyseur selon l'invention ou préparé selon l'un des procédés qui a été sulfuré. La mise en contact est effectuée à :

- une température comprise entre 200 et 400°C;
- une pression totale comprise entre 1 et 3 MPa;
- une Vitesse Volumique Horaire, définie comme étant le débit volumique de charge rapporté au volume de catalyseur, comprise entre 1 et 10 $h^{-1}$;
- un rapport volumique hydrogène/charge essence compris entre 100 et 600 Nl/l.

L'essence qui est traité par le procédé d'hydrodésulfuration est de préférence une essence issue d'une unité de craquage catalytique.

## Description détaillée de l'invention

La demanderesse a ainsi découvert un catalyseur d'hydrotraitement comprenant un support à base d'alumine et des métaux des groupes VIB et VIII de la classification périodique des éléments et du phosphore qui après sulfuration présente non seulement une activité améliorée en hydrodésulfuration mais également une forte sélectivité en hydrodésulfuration par rapport à la réaction d'hydrogénation des oléfines.

Selon un premier aspect, l'invention se rapporte à un catalyseur d'hydrotraitement comprenant un support constitué d'alumine, au moins un métal du groupe VIB, au moins un métal du groupe VIII et du phosphore, dans lequel:

- la surface spécifique du catalyseur est comprise entre 40 et 95 $m^2/g$;
- la densité en métal du groupe VIB, exprimée en nombre d'atomes de métal du groupe VIB par unité de surface du catalyseur, est comprise entre 7 et 30 atomes de métal du groupe VIB par $nm^2$ de catalyseur;

le catalyseur étant préparé par imprégnation des métaux du groupe VIB, du groupe VIII et du phosphore sur le support de manière à obtenir un précurseur catalytique imprégné puis par séchage dudit précurseur catalytique imprégné à une température inférieure à 200°C et sans calcination ultérieure sous air à une température supérieure à 200°C, et ledit catalyseur étant sulfuré.

Selon l'invention, la densité en métal du groupe VIB, exprimée en nombre d'atomes de métal du groupe VIB par unité de surface du catalyseur (nombre d'atomes de métal du groupe VIB par $nm^2$ de catalyseur) est calculée à partir de la relation suivante :

$$d\ (\text{métal du groupe VIB}) = \frac{(X \times N_A)}{(100 \times 10^{18} \times S \times M_M)}$$

avec :

- $X$ = % poids de métal du groupe VIB;
- $N_A$ = Nombre d'Avogadro égal à $6{,}022.10^{23}$;
- $S$ = Surface spécifique du catalyseur ($m^2/g$), mesurée selon la norme ASTM D3663 ;
- $M_M$ = Masse molaire du métal du groupe VIB (par exemple 95,94 g/mol pour le molybdène).

Selon l'invention, La teneur en métal du groupe VIB est comprise entre 3 et 35% poids d'oxyde de dudit métal du groupe VIB par rapport au poids total du catalyseur; la teneur en métal du groupe VIII est comprise entre 0,1 et 10% poids d'oxyde de dudit métal du groupe VIII par rapport au poids total du catalyseur; et la teneur en phosphore est comprise entre 0,3 et 10% poids de $P_2O_5$ par rapport au poids total du catalyseur.

De manière surprenante, les inventeurs ont établi qu'un catalyseur répondant au caractéristiques mentionnées ci-dessus et préparé par imprégnation des métaux du groupe VIB et VIII et du phosphore puis seulement séché à une température inférieure à 200°C sans subir ultérieurement une étape de calcination sous air à une température supérieure à 200°C présente une forte activité en hydrodésulfuration tout en étant plus sélectif vis-à-vis de la réaction d'hydrogénation des oléfines. Le gain d'activité permet de réduire la température du réacteur pour atteindre un même taux de désulfuration avec pour bénéfice de limiter les phénomènes de désactivation dus par exemple au cokage du catalyseur et donc de maintenir l'unité en service pour une durée supplémentaire, comparativement aux performances obtenues en présence de catalyseurs d'hydrodésulfuration (HDS) de l'état de l'art. Par ailleurs, le catalyseur selon l'invention démontre une sélectivité en hydrodésulfuration par rapport à l'hydrogénation des oléfines qui est améliorée lui conférant ainsi une propriété avantageuse dans le cadre de l'hydrotraitement de coupes d'hydrocarbures du type essence (c'est-à-dire ayant une température d'ébullition généralement comprise entre 30°C et 250°C) contenant des oléfines où l'on recherche à minimiser la réaction d'hydrogénation des oléfines afin de limiter la perte d'indice d'octane de l'essence traitée.

Le catalyseur selon l'invention comprend ainsi un support sur lequel est déposée une phase active métallique. Le support est un solide poreux constitué d'alumine. De préférence, l'alumine est une alumine delta, gamma ou thêta, seule ou en mélange.

Le volume poreux du support d'alumine est généralement compris entre 0,4 $cm^3$/g et 1,3 $cm^3$/g, de préférence compris entre 0,6 $cm^3$/g et 1,1 $cm^3$/g. Le volume poreux total est mesuré par porosimétrie au mercure selon la norme ASTM D4284 avec un angle de mouillage de 140°, telle que décrite dans l'ouvrage Rouquerol F.; Rouquerol J.; Singh K. « Adsorption by Powders & Porous Solids: Principle, methodology and applications », Academic Press, 1999, par exemple au moyen d'un appareil modèle Autopore III™ de la marque Microméritics™.

La surface spécifique du support d'alumine est généralement comprise entre 20 $m^2$/g et 200 $m^2$/g, de préférence entre 20 $m^2$/g et 180 $m^2$/g, de façon plus préférée entre 30 $m^2$/g et 170 $m^2$/g. La surface spécifique est déterminée dans la présente invention par la méthode B.E.T selon la norme ASTM D3663, méthode décrite dans le même ouvrage cité ci-dessus.

Le support d'alumine se présente avantageusement sous forme de poudre ou sous forme de billes, d'extrudés, de pastilles, ou d'agglomérats irréguliers et non sphériques dont la forme spécifique peut résulter d'une étape de concassage.

Selon un mode de réalisation préféré, le catalyseur selon l'invention comprend un support alumine qui est obtenu à partir d'une alumine gel (ou gel d'alumine) qui comprend essentiellement un précurseur du type oxy(hydroxyde) d'aluminium (AIO(OH)) - également dénommé boehmite. Le gel d'alumine (ou autrement dénommé gel de boehmite) peut être synthétisé par précipitation de solutions basiques et/ou acides de sels d'aluminium induite par changement de pH ou tout autre méthode connue de l'homme de métier (P. Euzen, P. Raybaud, X. Krokidis, H. Toulhoat, J.L. Le Loarer, J.P. Jolivet, C. Froidefond, Alumina, in Handbook of Porous Solids, Eds F. Schüth, K.S.W. Sing, J. Weitkamp, Wiley-VCH, Weinheim, Germany, 2002, pp. 1591-1677).

Généralement la réaction de précipitation est effectuée à une température comprise entre 5°C et 80°C et à un pH compris entre 6 et 10. De ma nière préférée la température est comprise entre 35°C et 70°C et le pH est compris en tre 6 et 10.

Selon un mode de réalisation, l'alumine gel est obtenue par mise en contact d'une solution aqueuse d'un sel acide d'aluminium avec une solution basique. Par exemple le sel acide d'aluminium est choisi dans le groupe constitué par le sulfate d'aluminium, le nitrate d'aluminium ou le chlorure d'aluminium. De manière préférée, ledit sel acide est le sulfate d'aluminium. La solution basique est préférentiellement choisie parmi la soude ou la potasse.

Alternativement, on peut mettre en contact une solution alcaline de sels d'aluminium qui peuvent être choisis dans le groupe constitué par l'aluminate de sodium et l'aluminate de potassium avec une solution acide. Dans une variante très préférée, le gel est obtenu par mise en contact d'une solution d'aluminate de sodium avec de l'acide nitrique. La solution d'aluminate de sodium présente avantageusement une concentration comprise entre $10^{-5}$ et $10^{-1}$ mol.$L^{-1}$ et de manière préférée cette concentration est comprise entre $10^{-4}$ et $10^{-2}$ mol.$L^{-1}$.

Selon un autre mode de réalisation, l'alumine gel est obtenue par mise en contact d'une solution aqueuse de sels acides d'aluminium avec une solution alcaline de sels d'aluminium.

Le gel d'alumine obtenu après l'étape de précipitation est ensuite soumis à une étape de malaxage de préférence dans un milieu acide. L'acide mis en oeuvre peut être par exemple de l'acide nitrique. Cette étape est réalisée au moyen d'outils connus tels que des malaxeurs bras en Z, des malaxeurs à meules, des mono ou bi-vis continues permettant la transformation du gel en un produit ayant la consistance d'une pâte.

Selon un mode de réalisation avantageux, on apporte un ou plusieurs composés dits "agents porogènes" dans le milieu de malaxage. Ces composés présentent la propriété de se dégrader par chauffage et créer ainsi une porosité dans le support. Par exemple on peut utiliser comme composés porogènes la farine de bois, le charbon de bois, des goudrons, des matières plastiques.

La pâte ainsi obtenue après malaxage est par exemple passée au travers d'une filière d'extrusion lorsque l'on désire obtenir un support sous forme d'extrudé. Généralement les extrudés ont un diamètre compris entre 0,4 et 100 mm, de préférence entre 0,5 et 100 mm, de manière plus préférée entre 0,5 et 10 mm et de manière encore plus préférée entre 0,4 et 4 mm. Ces extrudés peuvent être de forme cylindrique, multilobée (par exemple trilobée ou quadrilobée).

Après sa mise en forme, le support est éventuellement séché avant de subir un traitement thermique. Par exemple le séchage est effectué à une température comprise entre 100 et 200°C.

Le support séché subit ensuite une étape de traitement thermique qui permet de lui conférer des propriétés physiques répondant à l'application envisagée.

Selon un premier mode de réalisation, le traitement thermique comprend au moins une étape de traitement hydrothermal et au moins une étape de calcination. On désigne par le terme "traitement hydrothermal", un traitement en présence d'eau à une température supérieure à la température ambiante. De préférence le traitement hydrothermal est conduit à une température comprise entre 100 et 300°C, pendant 0,5 à 8 heures.

Au cours de ce traitement hydrothermal, on peut traiter de différentes manières le support alumine. Ainsi, on peut imprégner au préalable l'alumine d'une solution acide puis lui faire subir un traitement hydrothermal soit en phase vapeur, soit en phase liquide. Cette imprégnation, avant le traitement hydrothermal, peut être effectuée à sec ou par immersion de l'alumine dans une solution aqueuse acide. Par imprégnation à sec, on entend une mise en contact de l'alumine avec un volume de solution inférieur ou égal au volume de reprise en eau de l'alumine traitée. De préférence, l'imprégnation est réalisée à sec.

On peut également traiter le support alumine sans imprégnation préalable par une solution acide, l'acidité étant dans ce cas apportée par une solution aqueuse mise en oeuvre lors du traitement hydrothermal proprement dit.

La solution aqueuse acide comprend au moins un composé acide permettant de dissoudre au moins une partie de l'alumine. On entend par "composé acide permettant de dissoudre au moins une partie de l'alumine", tout composé acide qui, mis en contact avec l'alumine, réalise la mise en solution d'au moins une partie des ions aluminium. L'acide permet, de préférence, de dissoudre au moins 0,5% en poids d'alumine du support alumine. De préférence, cet acide est choisi parmi les acides forts tels que l'acide nitrique, l'acide chlorhydrique, l'acide perchlorique, l'acide sulfurique ou un acide faible mis en oeuvre à une concentration telle que sa solution aqueuse présente un pH inférieur à 4, tel que l'acide acétique, ou un mélange de ces acides.

Selon un mode préféré, on réalise le traitement hydrothermal en présence d'acide nitrique et d'acide acétique pris seul ou en mélange. Ce traitement peut être réalisé en autoclave et dans ce cas de préférence en autoclave à panier rotatif tel que celui défini dans la demande de brevet EP-A-0 387 109.

Le traitement hydrothermal peut également être réalisé sous pression de vapeur saturante ou sous une pression partielle de vapeur d'eau au moins égale à 70% de la pression de vapeur saturante correspondant à la température de traitement.

L'étape de calcination qui a lieu après le traitement hydrothermal selon ce premier mode de réalisation se déroule à une température généralement comprise entre 400 et 1500°C, de préférence entre 800 et 1300°C, pendant 1 et 8 heur es sous air dont la teneur en eau est généralement comprise entre 0 et 50% poids.

Selon une variante du premier mode de réalisation de l'étape de traitement thermique, le support séché peut également subir successivement une première étape de calcination, suivie d'une étape de traitement hydrothermal et enfin une deuxième étape de calcination.

Dans ce cas, les deux étapes de calcination sont effectuées dans les gammes de conditions opératoires décrites ci-dessus, les conditions opératoires pouvant être identiques ou différentes dans chacune des étapes de calcination.

Selon un second mode de réalisation alternatif de traitement thermique, le support ne subit qu'un traitement thermique de calcination, c'est-à-dire qu'il n'y a pas de traitement hydrothermal avant ou après cette calcination. Celle-ci est réalisée à une température généralement comprise entre 400 et 1500°C, de préférence entre 500 et 1200°C, pendant 1 et 8 heures sous air ayant une teneur en eau généralement comprise entre 0 et 50% poids.

Dans ce mode de réalisation l'étape de calcination peut être effectuée en plusieurs étapes par paliers croissants de température jusqu'à atteindre la température finale de calcination désirée.

A l'issue du traitement thermique final, le support a une surface spécifique généralement comprise entre 20 et 200 m$^2$/g. Le support présente une structure cristallographique du type alumine delta, gamma ou thêta, seule ou en mélange. L'existence des différentes structures cristallographiques est liée notamment aux conditions de mises en oeuvre du traitement thermique et en particulier à la température de calcination finale.

Le catalyseur selon l'invention est composé d'un support d'alumine, de phosphore et d'une phase active formée d'au moins un métal du groupe VIB et d'au moins un métal du groupe VIII. Lors de sa préparation le catalyseur ne subit pas de calcination, c'est-à-dire que le précurseur catalytique imprégné n'est pas soumis à une étape de traitement thermique sous air à une température supérieure à 200°C.

La teneur totale en métal du groupe VIII est comprise entre 0,1 et 10% poids d'oxyde du métal du groupe VIII par rapport au poids total du catalyseur, de préférence comprise entre 0,6 et 8% poids, de préférence comprise entre 2 et 7%, de manière très préférée comprise entre 2 et 6% poids et de manière encore plus préférée comprise entre 3 et 6% poids d'oxyde du métal du groupe VIII par rapport au poids total du catalyseur.

La teneur en métal du groupe VIB est comprise entre 3 et 35% poids d'oxyde du métal du groupe VIB par rapport au poids total du catalyseur, de préférence comprise entre 5 et 30% poids, de préférence comprise entre 7 et 28% poids, de manière très préférée comprise entre 10 et 25% poids d'oxyde du métal du groupe VIB par rapport au poids total du catalyseur.

Le catalyseur selon l'invention présente une teneur en phosphore généralement comprise entre 0,3 et 10% poids de P$_2$O$_5$ par rapport au poids total de catalyseur, de préférence entre 2 et 8% poids de P$_2$O$_5$ par rapport au poids total de catalyseur. Par exemple, le phosphore présent dans le catalyseur est combiné avec le métal du groupe VIB et éventuellement avec également le métal du groupe VIII sous la forme d'hétéropolyanions.

Le catalyseur d'hydrotraitement selon l'invention, sous forme oxyde se caractérise par une surface spécifique comprise entre 40 et 95 m$^2$/g, de manière préférée comprise entre 50 et 90 m$^2$/g.

En outre le catalyseur présente une densité en métal du groupe VIB, exprimée en nombre d'atomes dudit métal par unité de surface du catalyseur, qui est comprise entre 7 et 30 atomes de métal du groupe VIB par nm$^2$ de catalyseur,

de manière préférée comprise entre 7 et 25 atomes de métal du groupe VIB par nm$^2$ de catalyseur et de manière très préférée comprise entre 7 et 20 atomes de métal du groupe VIB par nm$^2$ de catalyseur. De manière encore plus préférée, la densité en métal du groupe VIB, exprimée en nombre d'atomes dudit métal par unité de surface du catalyseur est comprise entre 7 et 15 atomes de métal du groupe VIB par nm$^2$ de catalyseur. A titre d'exemple, si le catalyseur contient 20% poids d'oxyde de molybdène MoO$_3$ (soit 13,33% poids de Mo) et a une surface spécifique de 100 m$^2$/g, la densité d(Mo) est égale à :

$$d\,(Mo) = \frac{(13,33 \times N_A)}{(100 \times 10^{18} \times 100 \times 96)} = 8,3 \text{ atomes de Mo/nm}^2 \text{ de catalyseur}$$

Le rapport molaire métal du groupe VIII sur métal du groupe VIB du catalyseur est généralement compris entre 0,1 et 0,8, de préférence compris entre 0,2 et 0,6.

Par ailleurs, le rapport molaire phosphore/(métal du groupe VIB) est généralement compris entre 0,1 et 0,7, de préférence compris entre 0,2 et 0,6.

Le métal du groupe VIB présent dans la phase active du catalyseur est préférentiellement choisi parmi le molybdène et le tungstène.

Le métal du groupe VIII présent dans la phase active du catalyseur est préférentiellement choisi parmi le cobalt, le nickel et le mélange de ces deux éléments.

La phase active du catalyseur est choisie de préférence dans le groupe formé par la combinaison des éléments nickel-molybdène, cobalt-molybdène et nickel-cobalt-molybdène et de manière très préférée la phase active est constituée de cobalt et de molybdène.

Le catalyseur selon l'invention est préparé selon un procédé comprenant les étapes suivantes:

a) on met en contact au moins un composant d'un métal du groupe VIB, au moins un composant d'un métal du groupe VIII, du phosphore avec le support, de manière à obtenir un précurseur de catalyseur;
b) on sèche ledit précurseur de catalyseur issu de l'étape a) à une température inférieure à 200°C, sans le calciner ultérieurement sous air à une température supérieure à 200°C,
c) on sulfure le catalyseur séché de l'étape b).

L'étape a) de mise en contact du support comprend plusieurs modes de mise en oeuvre.

Selon un premier mode de mise en oeuvre de l'étape a) du procédé de préparation du catalyseur, on procède au dépôt desdits composants des métaux du groupe VIB, du groupe VIII et du phosphore sur ledit support, par une ou plusieurs étapes de co-imprégnations, c'est-à-dire que lesdits composants des métaux du groupe VIB, du groupe VIII et du phosphore sont introduits simultanément dans ledit support. La ou les étapes de co-imprégnation est (sont) effectuée(s) préférentiellement par imprégnation à sec ou par imprégnation en excès de solution. Lorsque ce premier mode comprend la mise en oeuvre de plusieurs étapes de co-imprégnation, chaque étape de co-imprégnation est de préférence suivie d'une étape de séchage intermédiaire généralement à une température inférieure à 200°C, avantageusement comprise entre 50 et 180°C, de préférence entre 60 et 150°C, de manière très préférée entre 75 et 140°C.

Selon un mode de réalisation préféré par co-imprégnation, la solution aqueuse d'imprégnation lorsqu'elle contient du cobalt, du molybdène et du phosphore est préparée dans des conditions de pH favorisant la formation d'hétéropolyanions en solution. Par exemple le pH d'une telle solution aqueuse est compris entre 1 et 5.

Selon un deuxième mode de mise en oeuvre de l'étape a) du procédé de préparation du catalyseur, le précurseur de catalyseur est préparé en procédant aux dépôts successifs et dans un ordre indifférent d'un composant d'un métal du groupe VIB, d'un composant d'un métal du groupe VIII et du phosphore sur ledit support. Les dépôts peuvent être réalisés par imprégnation à sec, par imprégnation en excès ou encore par dépôt-précipitation selon des méthodes bien connues de l'Homme du métier. Dans ce second mode de réalisation, le dépôt des composants des métaux des groupes VIB et VIII et du phosphore peut être effectué par plusieurs imprégnations avec une étape de séchage intermédiaire entre deux imprégnations successives généralement à une température comprise entre 50 et 180 °C, de préférence entre 60 et 150°C, de manière très préfé rée entre 75 et 140°C.

Quel que soit le mode de dépôt des métaux et du phosphore mis en oeuvre, le solvant qui entre dans la composition des solutions d'imprégnation est choisi de manière à solubiliser les précurseurs métalliques de la phase active, telle que l'eau ou un solvant organique (par exemple un alcool).

A titre d'exemple, parmi les sources de molybdène, on peut utiliser les oxydes et hydroxydes, les acides molybdiques et leurs sels en particulier les sels d'ammonium tels que le molybdate d'ammonium, l'heptamolybdate d'ammonium, l'acide phosphomolybdique (H$_3$PMo$_{12}$O$_{40}$), et leurs sels, et éventuellement l'acide silicomolybdique (H$_4$SiMo$_{12}$O$_{40}$) et ses sels. Les sources de molybdène peuvent être également tout hétéropolycomposé de type Keggin, Keggin lacunaire, Keggin substitué, Dawson, Anderson, Strandberg, par exemple.

On utilise de préférence le trioxyde de molybdène et les hétéropolycomposés de type Keggin, Keggin lacunaire, Keggin substitué et Strandberg.

Les précurseurs de tungstène qui peuvent être utilisés sont également bien connus de l'homme du métier. Par exemple, parmi les sources de tungstène, on peut utiliser les oxydes et hydroxydes, les acides tungstiques et leurs sels en particulier les sels d'ammonium tels que le tungstate d'ammonium, le métatungstate d'ammonium, l'acide phosphotungstique et leurs sels, et éventuellement l'acide silicotungstique ($H_4SiW_{12}O_{40}$) et ses sels. Les sources de tungstène peuvent également être tout hétéropolycomposé de type Keggin, Keggin lacunaire, Keggin substitué, Dawson, par exemple. On utilise de préférence les oxydes et les sels d'ammonium tel que le métatungstate d'ammonium ou les hétéropolyanions de type Keggin, Keggin lacunaire ou Keggin substitué.

Les précurseurs de cobalt qui peuvent être utilisés sont avantageusement choisis parmi les oxydes, les hydroxydes, les hydroxycarbonates, les carbonates et les nitrates, par exemple. L'hydroxyde de cobalt et le carbonate de cobalt sont utilisés de manière préférée.

Les précurseurs de nickel qui peuvent être utilisés sont avantageusement choisis parmi les oxydes, les hydroxydes, les hydroxycarbonates, les carbonates et les nitrates, par exemple. L'hydroxyde de nickel et l'hydroxycarbonate de nickel sont utilisés de manière préférée.

Le phosphore peut avantageusement être introduit dans le catalyseur à divers stades de sa préparation et de diverses manières. Le phosphore peut être introduit lors de la mise en forme dudit support d'alumine, ou de préférence après cette mise en forme. Il peut par exemple être introduit juste avant ou juste après la peptisation de la matrice choisie, telle que par exemple et de préférence l'oxyhydroxyde d'aluminium (boehmite) précurseur de l'alumine. Il peut également être avantageusement introduit seul ou en mélange avec l'un au moins des métaux du groupe VIB et VIII. Le phosphore est de préférence introduit en mélange avec les précurseurs des métaux du groupe VIB et du groupe VIII, en totalité ou en partie sur le support d'alumine mis en forme, par une imprégnation à sec dudit support d'alumine à l'aide d'une solution contenant les précurseurs des métaux et le précurseur du phosphore. La source de phosphore préférée est l'acide orthophosphorique $H_3PO_4$, mais ses sels et esters comme les phosphates d'ammonium ou leurs mélanges conviennent également. Le phosphore peut également être introduit en même temps que le(s) élément(s) du groupe VIB sous la forme, par exemple, d'hétéropolyanions de Keggin, Keggin lacunaire, Keggin substitué ou de type Strandberg.

A l'issue de ou des étapes d'imprégnation des métaux du groupe VIII, du groupe VIB et du phosphore, le précurseur du catalyseur est soumis à une étape b) de séchage effectuée par toute technique connue de l'homme du métier. Elle est avantageusement effectuée à pression atmosphérique ou à pression réduite. De manière préférée, cette étape est réalisée à pression atmosphérique. Cette étape b) est effectuée à une température inférieure à 200°C, de préférence comprise entre 50 et 180°C, de préférence comprise entre 60°C et 150°C et de manière très préférée comprise entre 75°C et 140 °C.

L'étape b) est avantageusement effectuée en lit traversé en utilisant de l'air ou tout autre gaz chaud. De manière préférée, lorsque le séchage est effectué en lit traversé, le gaz utilisé est soit l'air, soit un gaz inerte comme l'argon ou l'azote. De manière très préférée, le séchage est réalisé en lit traversé en présence d'air.

De préférence, cette étape de séchage a une durée comprise entre 30 minutes et 4 heures, et de préférence comprise entre 1 heure et 3 heures.

A l'issue de l'étape b) du procédé selon l'invention, on obtient un catalyseur séché qui n'est soumis à aucune étape de calcination ultérieure, par exemple sous air, à une température supérieure à 200°C.

Avant son utilisation en tant que catalyseur d'hydrotraitement, il est avantageux de soumettre le catalyseur à une étape de sulfuration (phase d'activation). Cette phase d'activation s'effectue par les méthodes bien connues de l'homme de l'art, et avantageusement sous une atmosphère sulfo-réductrice en présence d'hydrogène et d'hydrogène sulfuré. L'hydrogène sulfuré peut être utilisé directement ou généré par un agent sulfure (tel que le diméthyldisulfure).

Selon un autre aspect de l'invention, le catalyseur d'hydrotraitement tel que décrit plus haut comprend en outre un ou plusieurs composés organiques contenant de l'oxygène et/ou de l'azote. Un tel catalyseur est désigné par le terme "catalyseur additivé" dans la suite de la description. Le composé organique présent dans le catalyseur contient plus de 2 atomes de carbone et au moins un atome d'oxygène et/ou d'azote.

Le composé organique contenant de l'oxygène peut être choisi parmi un acide carboxylique, un alcool, un aldéhyde ou un ester. A titre d'exemple, le composé organique contenant de l'oxygène peut être choisi dans le groupe constitué par l'éthylène glycol, le triéthylène glycol, le glycérol, le polyéthylène glycol ayant un poids moléculaire de 150 à 1500, l'acétophénone, le 2,4-pentanedione, le pentanole, l'acide acétique, l'acide maléique, l'acide oxalique, l'acide tartrique, l'acide formique, l'acide citrique, un oligosaccharide cyclique composé d'au moins 6 unités glucopyrannose liées en $\alpha$ (1-4), un succinate de dialkyle. Le succinate de dialkyle est de préférence un succinate de dialkyle C1-C4, de préférence choisi dans le groupe composé du succinate de diméthyle, du succinate de diéthyle, du succinate de dipropyle et du succinate de dibutyle. De manière préférée, le succinate de dialkyle C1-C4 utilisé est le succinate de diméthyle ou le succinate de diéthyle. De manière très préférée, le succinate de dialkyle C1-C4 est le succinate de diméthyle. Selon un mode de réalisation, le composé organique comprend au moins la combinaison du succinate de dialkyle C1-C4, en particulier le succinate de diméthyle, et de l'acide acétique.

Le composé organique contenant de l'azote peut être choisi parmi une amine. A titre d'exemple, le composé organique contenant de l'azote peut être de l'éthylène diamine ou la tétraméthylurée.

Le composé organique contenant de l'oxygène et d'azote peut être choisi parmi un acide carboxylique aminé, un alcool aminé, un nitrile ou un amide. A titre d'exemple, le composé organique contenant de l'oxygène et de l'azote peut être l'acide aminotriacétique l'acide 1,2-cyclohexanediaminetétraacétique, la mono-éthanolamine, l'acétonitrile, la N-méthylpyrrolidone, le diméthylformamide ou encore l'acide éthylène diamine tétraacétique (EDTA).

Le catalyseur additivé selon l'invention est préparé selon un procédé comprenant les étapes suivantes:

i) on met en contact au moins un composant d'un métal du groupe VIB, au moins un composant d'un métal du groupe VIII, du phosphore et au moins un composé organique contenant de l'oxygène et/ou de l'azote avec le support, de manière à obtenir un précurseur de catalyseur additivé,

ii) on sèche ledit précurseur de catalyseur additivé issu de l'étape i) à une température inférieure à 200°C, sans le calciner ultérieurement sous air à une température supérieure à 200°C de manière à fournir un catalyseur séché,

iii) on sulfure le catalyseur séché à l'étape ii).

Le rapport molaire de composé(s) organique(s) contenant de l'oxygène et/ou de l'azote par élément(s) du groupe VIB engagé sur le précurseur de catalyseur additivé est compris entre 0,05 à 9 mol/mol, de préférence compris entre 0,1 à 8 mol/mol, de manière préférée compris entre 0,2 et 7 mol/mol avant séchage de l'étape ii).

Par exemple lorsque le composant organique est un mélange de succinate de dialkyle C1-C4 (et en particulier du succinate de diméthyle) et de l'acide acétique, lesdits composants sont avantageusement introduits dans une quantité correspondant :

- à un rapport molaire de succinate de dialkyle (par ex diméthyle) par élément(s) du groupe VIB du précurseur catalytique additivé compris entre 0,05 à 2 mol/mol, de préférence compris entre 0,1 à 1,8 mol/mol, de manière préférée compris entre 0,15 et 1,5 mol/mol,
- à un rapport molaire d'acide acétique par élément(s) du groupe VIB du précurseur catalytique additivé compris entre 0,1 à 5 mol/mol, de préférence compris entre 0,5 à 4 mol/mol, de manière préférée compris entre 1,3 et 3 mol/mol et de manière très préférée, compris entre 1,5 et 2,5 mol/mol.

L'étape i) de mise en contact comporte plusieurs modes de mise en oeuvre.

Selon un premier mode de mise en oeuvre de l'étape i) du procédé de préparation du catalyseur additivé, on procède au dépôt des composants des métaux du groupe VIB et du groupe VIII, du phosphore et à celui du composé organique sur le support, par au moins une étape de co-imprégnation, préférentiellement par imprégnation à sec. Selon ce mode de mise en oeuvre, lesdits composants des métaux du groupe VIB et du groupe VIII, le phosphore et le composé organique sont introduits simultanément dans ledit support. Ce premier mode de réalisation de l'étape i) comprend la mise en oeuvre d'une ou plusieurs étapes de co-imprégnation, chaque étape de co-imprégnation est de préférence suivie d'une étape de séchage intermédiaire généralement à une température inférieure à 200°C, avantageusement comprise entre 50 et 180°C, de préférence comprise entre 60 et 150°C, de manière très préférée comprise entre 75 et 140°C.

Selon un deuxième mode de mise en oeuvre de l'étape i) du procédé de préparation du catalyseur additivé, on met en contact au moins un composé organique contenant de l'oxygène et/ou de l'azote avec au moins un précurseur catalytique comprenant au moins un métal du groupe VIII, au moins un métal du groupe VIB, le phosphore et le support. Ce deuxième mode de mise en oeuvre est une préparation dite par « post-imprégnation du composé organique ». Celle-ci est réalisée par exemple par imprégnation à sec.

Selon ce second mode de mise en oeuvre, la mise en contact selon l'étape i) comprend les étapes successives suivantes qui vont être détaillées par la suite :

i1) on imprègne un support alumine par au moins une solution contenant au moins un métal du groupe VIB, au moins un métal du groupe VIII et du phosphore pour obtenir un support imprégné,

i2) on sèche le support imprégné obtenu à l'étape i1) à une température inférieure à 200°C sans calcination ultérieure sous air pour obtenir un catalyseur séché,

i3) on imprègne le catalyseur séché obtenu à l'étape i2) par une solution d'imprégnation comprenant au moins un composé organique contenant de l'oxygène et/ou de l'azote pour obtenir un précurseur de catalyseur additivé,

i4) optionnellement, on laisse maturer le précurseur de catalyseur additivé obtenu à l'étape i3),

Dans l'étape i1), l'introduction des métaux du groupe VIB et du groupe VIII sur le support d'alumine peut être avantageusement effectuée par une ou plusieurs imprégnations en excès de solution sur le support à base d'alumine, ou de préférence par une ou plusieurs imprégnations à sec dudit support à base d'alumine, à l'aide d'une solution aqueuse ou organique contenant des précurseurs des métaux. Les précurseurs du métal du groupe VIB, du groupe VIII et du phosphore sont ceux décrits plus haut. L'introduction des métaux du groupe VIB et du groupe VIII et du phosphore sur le support d'alumine est ensuite suivie d'une étape i2) de séchage au cours de laquelle le solvant (qui est généralement de l'eau) est éliminé, à une température inférieure à 200°C, de préférence comprise entre 50 et 180°C, de manière préférée entre 60 et 150°C ou encore entre 75 et 140°C. L'étape de séchage du support imprégné ainsi obtenu n'est jamais suivie d'une étape de calcination sous air à une température supérieure ou égale à 200°C.

On notera que les étapes i1) et i2) correspondent respectivement aux étapes a) et b) du procédé de préparation du catalyseur "non additivé" selon l'invention décrit plus haut.

Conformément à l'étape i3), le catalyseur séché est imprégné par une solution d'imprégnation comprenant au moins un composé organique contenant de l'oxygène et/ou de l'azote. La solution d'imprégnation comprenant au moins un composé organique est de préférence une solution aqueuse.

Le(s)dit(s) composé(s) organique(s) peut(vent) avantageusement être déposé(s) en une ou plusieurs étapes soit par imprégnation en excès, soit par imprégnation à sec, soit par tout autre moyen connu de l'homme du métier. De préférence l'introduction du composé organique est réalisé par une seule étape d'imprégnation, et de manière particulièrement préférée par une seul étape d'imprégnation à sec.

Conformément à l'étape i4) du procédé de préparation, le précurseur de catalyseur additivé issu de l'étape i3) peut être soumis à une étape de maturation qui est avantageusement réalisée à pression atmosphérique, à une température comprise entre 17°C et 50°C. La durée de la maturation est généralement comprise entre 10 minutes et 48 heures et de préférence comprise entre 30 minutes et 5 heures.

Conformément à l'étape ii) du procédé de préparation, le précurseur de catalyseur additivé, après éventuellement une étape de maturation, est soumis à une étape de séchage à une température inférieure à 200°C, sans calcination ultérieure.

L'étape ii) de séchage du procédé selon l'invention est avantageusement effectuée par toute technique connue de l'homme du métier. Elle est avantageusement effectuée à pression atmosphérique ou à pression réduite. De manière préférée, cette étape est réalisée à pression atmosphérique.

Cette étape ii) est avantageusement effectuée à une température comprise entre 50 et 180°C, de préférence comprise entre 60°C et 150°C e t de manière très préférée comprise entre 75°C et 140°C. L'étape ii) peut être avantage usement effectuée en lit traversé en utilisant de l'air ou tout autre gaz chaud. De manière préférée, lorsque le séchage est effectué en lit traversé, le gaz utilisé est soit l'air, soit un gaz inerte comme l'argon ou l'azote.

De manière très préférée, le séchage est réalisé en lit traversé en présence d'air. De préférence, cette étape ii) a une durée comprise entre 30 minutes et 4 heures, et de préférence comprise entre 1 heure et 3 heures.

A l'issue de l'étape ii) du procédé selon l'invention, on obtient un catalyseur additivé qui n'est soumis à aucune étape de calcination ultérieure à une température supérieure ou égale à 200°C.

Selon un autre mode de réalisation alternatif, le procédé de préparation du catalyseur additivé combine la co-imprégnation d'un composé organique et la post-imprégnation d'un composé organique qui peut être identique ou différent de celui utilisé pour la co-imprégnation.

Ce mode de réalisation comprend les étapes suivantes:

i) on met en contact par co-imprégnation une solution contenant au moins un composant d'un métal du groupe VIB, au moins un composant d'un métal du groupe VIII, du phosphore et au moins un composé organique contenant de l'oxygène et/ou de l'azote avec le support, de manière à obtenir un précurseur de catalyseur additivé,

i') on sèche ledit précurseur de catalyseur additivé issu de l'étape i) à une température inférieure à 200°C, sans le calciner ultérieurement sous air à une température supérieure à 200°C,

i") on met en contact le précurseur de catalyseur additivé et séché issu de l'étape i') avec une solution d'un composé organique contenant de l'oxygène et/ou de l'azote,

ii) on sèche le précurseur de catalyseur additivé post-imprégné issu de l'étape i") à une température inférieure à 200°C, sans le calciner ultérieurement sous air à une température supérieure à 200°C, pour fournir un catalyseur additivé.

Les conditions opératoires décrites ci-avant sont bien entendu applicables dans le cadre de ce mode de réalisation.

Avant son utilisation, il est avantageux d'activer le catalyseur additivé. Cette phase d'activation correspond à une sulfuration qui s'effectue par les méthodes bien connues de l'homme de l'art, et avantageusement sous une atmosphère sulfo-réductrice en présence d'hydrogène et d'hydrogène sulfuré.

Le catalyseur additivé obtenu est donc avantageusement soumis à une étape de sulfuration, sans étape de calcination intermédiaire. Ledit catalyseur additivé est avantageusement sulfuré de manière ex situ ou in situ. On peut utiliser les mêmes agents sulfurants que ceux décrits pour le catalyseur séché selon l'invention.

L'invention se rapporte également à un procédé d'hydrotraitement d'une coupe du type essence. De manière très préférée, la coupe essence est une coupe essence oléfinique issue par exemple d'une unité de craquage catalytique (Fluid Catalytic Cracking selon la terminologie anglo-saxonne) .

Le procédé d'hydrodésulfuration selon l'invention permet de transformer les composés organo-soufrés de la charge d'hydrocarbure en sulfure d'hydrogène ($H_2S$) tout en limitant autant que possible l'hydrogénation des oléfines présentes dans ladite charge.

Le procédé d'hydrotraitement consiste à mettre en contact la coupe d'hydrocarbures avec le catalyseur selon l'invention et de l'hydrogène dans les conditions suivantes:

- une température comprise entre 200 et 400°C, de préférence comprise entre 230 et 330°C ;
- à une pression totale comprise entre 1 et 3 MPa, de préférence comprise entre 1,5 et 2,5 MPa;
- une Vitesse Volumique Horaire (VVH), définie comme étant le débit volumique de charge rapporté au volume de catalyseur, comprise entre 1 et 10 $h^{-1}$, de préférence comprise entre 2 et 6 $h^{-1}$;
- un rapport volumique hydrogène/charge essence compris entre 100 et 600 Nl/l, de préférence compris entre 200 et 400 Nl/l.

Le procédé d'hydrodésulfuration catalytique peut être réalisé dans un ou plusieurs réacteurs en série du type lit fixe ou du type lit bouillonnant. Si le procédé est mis en oeuvre au moyen d'au moins deux réacteurs en série, il est possible de prévoir un dispositif d'élimination de l'$H_2S$ de l'effluent issu du premier réacteur d'hydrodésulfuration avant de traiter ledit effluent dans le deuxième réacteur d'hydrodésulfuration.

**Exemples**

Exemple 1 - Préparation d'un catalyseur calciné A (non conforme à l'invention)

Le support S1 du catalyseur A est une alumine de transition de surface spécifique de 80 $m^2/g$. Cette alumine de transition est obtenue après les étapes suivantes : décomposition thermique de gibbsite à 800°C (à faible temps de séjour de 0,8 seconde), permettant l'obtention d'une poudre d'alumine de transition. Un lavage à l'eau permettant la diminution de la teneur en sodium est effectué sur la poudre qui est suivi d'un second traitement de déshydratation rapide similaire au précédent. La poudre d'alumine ainsi obtenue est ensuite mise en forme dans un drageoir pour former des billes qui sont ensuite séchées à 150°C. Ce support subit enfin un traitement hydrothermal à forte pression partielle d'eau (100%) pendant 8 heures puis calciné à 850°C.

Le catalyseur A est préparé par imprégnation à sec du support par une solution aqueuse contenant du trioxyde de molybdène, de l'hydroxyde de cobalt et de l'acide phosphorique. Le volume de la solution contenant les précurseurs des métaux et de phosphore étant rigoureusement égal au volume de reprise en eau du support (de 0,97 mL/g). La concentration des précurseurs de métaux en solution aqueuse est ajustée de manière à obtenir le pourcentage pondéral désiré en molybdène, cobalt et phosphore sur le catalyseur final. Afin d'obtenir une dissolution complète des précurseurs de métaux, la solution d'imprégnation est portée à reflux à 90°C pendant 2 heures. Après imprégnation à sec sur le support, le catalyseur est laissé maturé pendant 1h30 en enceinte saturée en eau, séché sous air en étuve à 90°C puis calciné sous air à 450°C.

Le catalyseur A obtenu après calcination a une teneur de 15,5% poids en molybdène (équivalent $MoO_3$), 3,4% poids de cobalt (équivalent CoO) et 3,9% poids de phosphore (équivalent $P_2O_5$), une surface spécifique de 62 $m^2/g$ et ainsi une densité surfacique en molybdène de 10,6 atomes par nanomètre carré de catalyseur. Ce catalyseur présente des rapports atomiques Co/Mo de 0,42 et P/Mo de 0,51.

Exemple 2 - Préparation d'un catalyseur séché B additivé à l'urée et à l'acide citrique et ne contenant pas de phosphore (non conforme à l'invention)

Le support S2 du catalyseur B est une alumine de transition de surface spécifique de 44 $m^2/g$ obtenue par recalcination sous air à 1100°C d'un support alumine S0 mis en forme d'extrudé.

Le support S0 a été synthétisé par réaction de précipitation via un mélange d'aluminate de soude et de sulfate d'aluminium. Cette réaction se fait à une température de 60°C, à un pH de 9, durant 60 minutes et sous une agitation de 200 tr/min. Le gel ainsi obtenu subit un malaxage sur un malaxeur bras en Z pour fournir une pâte. L'extrusion est réalisée par passage de la pâte à travers une filière munie d'orifice de diamètre 1,6 mm en forme de trilobe. Les extrudés ainsi obtenus sont séchés à 150°C puis calciné à 450°C sous air sec. Le support S0 est ensuite calciné sous air à 1100°C et on obtient ainsi le support S2.

Le catalyseur B est préparé par imprégnation à sec du support S2 par une solution aqueuse contenant les précurseurs de cobalt et molybdène, respectivement le carbonate de cobalt et l'heptamolybdate d'ammonium. Cette solution contient également de l'urée et de l'acide citrique. La concentration en urée et en acide citrique est déterminée de manière à obtenir un rapport molaire urée/molybdène et acide citrique/molybdène de 3,8 et 0,6 respectivement.

Le volume de solution d'imprégnation est ajusté avec de l'eau de manière à atteindre strictement le volume de reprise en eau du support (de 0,62 mL/g). La concentration en cobalt et molybdène en solution est ajusté de manière à obtenir le pourcentage pondéral désiré en molybdène, cobalt et phosphore sur le catalyseur final. Après imprégnation le catalyseur est séché en étuve sous air à 110°C. Aucune calcination sous air n'est réalisée ensuite.

Le catalyseur B obtenu après séchage présente une teneur de 15,3% poids en molybdène (équivalent oxyde $MoO_3$), 3,3% poids de cobalt (équivalent oxyde CoO), une surface spécifique de 34 m²/g, et ainsi une densité surfacique en molybdène de 18,7 atomes par nanomètre carré de catalyseur (noté « dMo »). Ce catalyseur présente un rapport atomique Co/Mo de 0,41 et ne contient pas de phosphore.

Exemple 3 - Préparation des catalyseurs séchés C à I (conforme à l'invention)

Les catalyseurs C à J sont obtenus par imprégnation à sec selon le même protocole que le catalyseur A et sur différents support à base d'alumine de transition, suivi des mêmes étapes de maturation et séchage. Aucune étape de calcination sous air n'est réalisée après séchage.

Les solutions aqueuses d'imprégnation sont obtenus par dissolution de trioxyde de molybdène, d'hydroxyde de cobalt et d'acide phosphorique. Les quantités de précurseurs à introduire en solution sont ajustées en fonction des teneurs pondérales désirées sur le catalyseur final.

Les alumines S3, S4 et S5 sont préparés par post-traitement de l'alumine S0 dans différentes conditions. Le support S3 est obtenu par calcination sous air humide à 850°C (à 50% d'eau/kg d'air sec). Le support S4 est obtenu après traitement hydrothermal à 100°C en présence d'acide acétique à 6,5% pendant 3 heures en autoclave puis calcination à 1000°C sous air. Le support S5 est obtenue par calcination sous air du support S4 à 1150°C.

Le tableau 1 donne les caractéristiques des supports S1, S2, S3, S4 et S5 mis en oeuvre.

**Tableau 1**

| Alumine | Phases cristallographiques | $S_{BET}$ (m²/g) | Diamètre médian en volume (nm) | Volume poreux total (cm³/g) |
|---------|---------------------------|------------------|-------------------------------|------------------------------|
| S1 | thêta, delta | 81 | 44 | 1,03 |
| S2 | alpha, thêta | 44 | 56 | 0,63 |
| S3 | gamma | 137 | 18,4 | 0,71 |
| S4 | thêta, delta | 78 | 40,7 | 0,84 |
| S5 | alpha, thêta | 37 | 58 | 0,62 |

Les phases cristallographiques sont obtenues à partir de diffractogramme obtenue par diffraction des rayons X. La surface spécifique BET est déterminée par la méthode d'adsorption-désorption d'azote selon la norme ASTM D3663-03. Le diamètre médian en volume et le volume poreux total sont obtenus par porosimétrie au mercure selon la norme ASTM D4284-03.

Le tableau 2 regroupe les teneurs en métaux des catalyseurs obtenus ainsi que la densité (dMo) en métal du groupe VIB (le molybdène), exprimée en nombre d'atomes de molybdène par unité de surface du catalyseur (at/nm²).

**Tableau 2**

| Catalyseurs | Support | $MoO_3$ (%pds) | CoO (%pds) | $P_2O_5$ (%pds) | $S_{BET}$ (m²/g) | dMo (at/nm²) |
|-------------|---------|----------------|------------|------------------|-------------------|---------------|
| A (non conforme) | S1 | 15,5 | 3,4 | 3,9 | 62 | 10,6 |
| B (non conforme) | S2 | 15,3 | 3,3 | 0 | 34 | 18,7 |
| C (conforme) | S3 | 22 | 4,6 | 6 | 92 | 10,0 |
| D (conforme) | S3 | 28 | 5,8 | 7,6 | 82 | 14,6 |
| E (conforme) | S4 | 11,4 | 2,2 | 3,1 | 65 | 7,3 |
| F (conforme) | S4 | 16,2 | 3,3 | 4,3 | 59 | 11,3 |
| G (conforme) | S4 | 22,2 | 4,5 | 6,1 | 52 | 17,7 |

(suite)

| Catalyseurs | Support | MoO$_3$ (%pds) | CoO (%pds) | P$_2$O$_5$ (%pds) | S$_{BET}$ (m$^2$/g) | dMo (at/nm$^2$) |
|---|---|---|---|---|---|---|
| H (conforme) | S4 | 24,1 | 4,7 | 6,5 | 51 | 20,0 |
| I (conforme) | S4 | 28 | 5,8 | 7,6 | 46 | 25,6 |

Exemple 4 - Evaluation des performances catalytiques des catalyseurs A à I

Une charge modèle représentative d'une essence de craquage catalytique (FCC) contenant 10% poids de 2,3-diméthylbut-2-ène et 0,33% poids de 3-méthylthiophène (soit 1000 ppm pds de soufre dans la charge) est utilisée pour l'évaluation des performances catalytiques des différents catalyseurs. Le solvant utilisé est l'heptane.

La réaction d'hydrodésulfuration (HDS) est opérée dans un réacteur à lit fixe traversé sous une pression totale de 1,5 MPa, à 210°C, à VVH = 6 h$^{-1}$ (VVH = débit volumique de charge/volume de catalyseur), et un rapport volumique H$_2$/charge de 300 Nl/l, en présence de 4 mL de catalyseur. Au préalable à la réaction d'HDS, le catalyseur est sulfuré in-situ à 350°C pendant 2 heures sous un flux d'hydrogène contenant 15% mol d'H$_2$S à pression atmosphérique.

Chacun des catalyseurs est placé successivement dans ledit réacteur. Des échantillons sont prélevés à différents intervalles de temps et sont analysés par chromatographie en phase gazeuse de façon à observer la disparition des réactifs et la formation des produits.

Les performances catalytiques des catalyseurs sont évaluées en termes d'activité catalytique et de la sélectivité. L'activité en hydrodésulfuration (HDS) est exprimée à partir de la constante de vitesse pour la réaction d'HDS du 3-méthylthiophène (kHDS), normalisée par le volume de catalyseur introduit et en supposant une cinétique d'ordre 1 par rapport au composé soufré. L'activité en hydrogénation des oléfines (HydO) est exprimée à partir de la constante de vitesse de la réaction d'hydrogénation du 2,3-diméthylbut-2-ène, normalisée par le volume de catalyseur introduit et en supposant une cinétique d'ordre 1 par rapport à l'oléfine.

La sélectivité du catalyseur est exprimée par le rapport normalisé des constantes de vitesse kHDS/kHydO. Le rapport kHDS/kHydO sera d'autant plus élevé que le catalyseur sera plus sélectif.

Les valeurs obtenues sont normalisées en prenant le catalyseur A comme référence (activité HDS relative et sélectivité relative égale à 100). Les performances sont donc l'activité HDS relative et la sélectivité relative.

**Tableau 3**

| Catalyseurs | Supports | Activité HDS relative | Sélectivité relative |
|---|---|---|---|
| A (comparatif) | S1 | 100 | 100 |
| B (comparatif) | S2 | 78 | 98 |
| C (conforme) | S3 | 238 | 114 |
| D (conforme) | S3 | 195 | 118 |
| E (conforme) | S4 | 125 | 143 |
| F (conforme) | S4 | 183 | 163 |
| G (conforme) | S4 | 200 | 169 |
| H (conforme) | S4 | 213 | 175 |
| I (conforme) | S4 | 215 | 178 |

Les catalyseurs selon l'invention présentent tous une sélectivité améliorée en hydrodésulfuration par rapport à l'hydrogénation des oléfines par rapport aux catalyseurs non-conformes à l'invention A (calciné) et B (le catalyseur ne contient pas de phosphore).

Cette amélioration de sélectivité des catalyseurs est particulièrement intéressante dans le cas d'une mise en oeuvre dans un procédé d'hydrodésulfuration d'essence contenant des oléfines pour lequel on cherche à limiter autant que possible la perte d'octane due à l'hydrogénation des oléfines.

Les catalyseurs C à I sont également plus actifs en hydrodésulfuration que les catalyseurs non-conformes A et B.

Exemple 5 - Préparation d'un catalyseur séché K1 et K2 (conforme à l'invention), en présence d'une molécule organique en co-impréanation

Les catalyseurs K1 et K2 sont obtenus par imprégnation à sec du support S4. Le volume de la solution aqueuse d'imprégnation contenant les précurseurs des métaux et de phosphore étant rigoureusement égal au volume de reprise en eau du support (de 0,91 mL/g). La concentration des précurseurs de métaux en solution aqueuse est ajustée de manière à obtenir le pourcentage pondéral désiré en molybdène, cobalt et phosphore sur le catalyseur final.

On a préparé deux solutions d'imprégnation à partir de la solution obtenus par dissolution de trioxyde de molybdène, d'hydroxyde de cobalt et d'acide phosphorique en ajoutant comme molécule organique de l'acide citrique pour la première solution et du triéthylèneglycol pour la seconde solution. La première solution d'imprégnation présente une rapport molaire acide citrique/molybdène de 0,4. La seconde solution d'imprégnation a un rapport molaire triéthylèneglycol/molybdène de 0,4. Les solutions d'imprégnation sont portées à reflux à 90°C pendant 2 heures, afin d'obtenir une dissoluti on complète des précurseurs de métaux en solution. Ces solutions sont ensuite imprégnées sur le support S4. Après imprégnation à sec, les catalyseurs sont laissés en maturation pendant 1h30 en enceinte fermée saturée en eau, puis séché sous air en étuve à 120°C. Pour le catalyseur K1 qui contient de l'acide citrique, les teneurs pondérales, en équivalent oxyde, en molybdène ($MoO_3$), cobalt (CoO) et phosphore ($P_2O_5$) sont respectivement de 10,5 ; 2,2 et 2,9.

Pour le catalyseur K2 qui contient du triéthylèneglycol, les teneurs pondérales, en équivalent oxyde, en molybdène ($MoO_3$), cobalt (CoO) et phosphore ($P_2O_5$) sont respectivement de 10,4 ; 2,2 et 2,9.

**Tableau 4**

| Catalyseurs additivé (co-imprégnation) | Support | $MoO_3$ (%pds) | CoO (%pds) | $P_2O_5$ (%pds) | $S_{BET}$ ($m^2$/g) | dMo (at/$nm^2$) |
|---|---|---|---|---|---|---|
| K1 | S4 | 10,5 | 2,2 | 2,9 | 58 | 7,5 |
| K2 | S4 | 10,4 | 2,2 | 2,9 | 58 | 7,6 |

Exemple 6 - Préparation de catalyseurs séchés L1, L2 et L3 (conforme à l'invention), en présence d'une molécule organique en post-additivation

Les catalyseurs L1, L2 et L3 sont obtenus à partir du catalyseur séché E. Une étape supplémentaire d'imprégnation à sec est réalisée, par une solution aqueuse comprenant une ou plusieurs molécules organiques en mélange. Le volume de la solution est déterminé à partir du volume de reprise en eau du catalyseur séché E (à 0,76 mL/g), et en fonction de la quantité massique de catalyseur à préparer.

Le précurseur de catalyseur additivé L1 est obtenu par imprégnation à sec d'une solution aqueuse, contenant de l'acide citrique. La concentration en acide citrique en solution est déterminée de manière à obtenir un rapport molaire acide citrique/molybdène de 0,4.

Le précurseur de catalyseur additivé L2 est obtenu par imprégnation à sec d'une solution aqueuse, contenant du triéthylène glycol. La concentration en triéthylène glycol en solution est déterminée de manière à obtenir un rapport molaire triéthylèneglycol / molybdène de 0,4.

Le précurseur de catalyseur additivé L3 est obtenu par imprégnation à sec d'une solution aqueuse, contenant du succinate de diméthyle et de l'acide acétique. La concentration en succinate de diméthyle est déterminée de manière à obtenir un rapport molaire entre le succinate de diméthyle et le molybdène de 0,7 et le rapport volumique entre l'acide acétique et le succinate de diméthyle est fixée à 0,75.

Après imprégnation à sec, chacun des précurseurs de catalyseurs additivés L1, L2, L3 sont laissés en maturation sous air à température ambiante pendant 1h30 en enceinte fermée en atmosphère saturée en eau puis séchés à 140°C pendant 2 heures à l'évaporateur rotatif.

Avant additivation, les caractéristiques des précurseurs de catalyseurs L1, L2 et L3 sont identiques à celle du catalyseur E.

Exemple 7 - Evaluation des performances des catalyseurs K1, K2, L1, L2, L3 comparativement aux catalyseurs A et B (non-conformes)

Les performances des catalyseurs sont déterminées dans les conditions de l'exemple 4. Les résultats sont reportés dans le tableau 6.

**Tableau 6**

| Catalyseurs | Supports | Activité HDS relative | Sélectivité relative |
|---|---|---|---|
| A (comparatif) | S1 | 100 | 100 |
| B (comparatif) | S2 | 78 | 98 |
| K1 (conforme) | S4 | 255 | 187 |
| K2 (conforme) | S4 | 303 | 214 |
| L1 (conforme) | S4 | 273 | 189 |
| L2 (conforme) | S4 | 255 | 182 |
| L3 (conforme) | S4 | 288 | 188 |

Les catalyseurs selon l'invention présentent tous une sélectivité améliorée en hydrodésulfuration par rapport à l'hydrogénation des oléfines par rapport aux catalyseurs A (calciné) et B (pas de calcination, et pas de phosphore) non-conformes à l'invention.

Cette amélioration de sélectivité des catalyseurs est particulièrement intéressante dans le cas d'une mise en oeuvre dans un procédé d'hydrodésulfuration d'essence contenant des oléfines pour lequel on cherche à limiter autant que possible la perte d'octane due à l'hydrogénation des oléfines.

De plus, ces catalyseurs présente une activité HDS relative fortement améliorée par rapport aux catalyseurs A (calciné) et B (pas de calcination et pas de phosphore) non-conformes à l'invention. Ainsi, sans que cela ne soit lié à une quelconque théorie, l'ajout d'un molécule organique, soit en co-imprégnation, soit en post-additivation, permet en outre, d'accroître fortement l'activité HDS relative.

**Revendications**

1. Catalyseur d'hydrotraitement comprenant un support constitué d'alumine, au moins un métal du groupe VIB, au moins un métal du groupe VIII et du phosphore dans lequel :

   • la surface spécifique du catalyseur est comprise entre 40 et 95 m$^2$/g;
   • la densité en métal du groupe VIB, exprimée en nombre d'atomes de métal du groupe VIB par unité de surface du catalyseur, est comprise entre 7 et 30 atomes de métal du groupe VIB par nm$^2$ de catalyseur, la densité en métal du groupe VIB étant calculé à partir de la relation

$$d\ (\text{métal du groupe VIB}) = \frac{(X \times N_A)}{(100 \times 10^{18} \times S \times M_M)}$$

   avec :

   ◦ X = % poids de métal du groupe VIB;
   ◦ $N_A$ = Nombre d'Avogadro égal à 6,022.10$^{23}$;
   ◦ S = Surface spécifique du catalyseur (m$^2$/g), mesurée selon la norme ASTM D3663 ;
   ◦ $M_M$ = Masse molaire du métal du groupe VIB;

   • la teneur en métal du groupe VIB est comprise entre 3 et 35% poids d'oxyde de dudit métal du groupe VIB par rapport au poids total du catalyseur;
   • la teneur en métal du groupe VIII est comprise entre 0,1 et 10% poids d'oxyde de dudit métal du groupe VIII par rapport au poids total du catalyseur;
   • la teneur en phosphore est comprise entre 0,3 et 10% poids de P$_2$O$_5$ par rapport au poids total du catalyseur,

   le catalyseur étant préparé par imprégnation des métaux du groupe VIB, du groupe VIII et du phosphore sur le support de manière à obtenir un précurseur catalytique imprégné puis séchage dudit précurseur catalytique imprégné à une température inférieure à 200°C et sans calcination ultérieure sous air à une température supérieure à 200°C et ledit catalyseur étant sulfuré après séchage.

**2.** Catalyseur selon la revendication 1, dans lequel le rapport molaire (métal du groupe VIII)/(métal du groupe VIB) est compris entre 0,1 et 0,8 et le rapport molaire phosphore/(métal du groupe VIB) est compris entre 0,1 et 0,7.

**3.** Catalyseur selon l'une des revendications précédentes, dans lequel la surface spécifique du catalyseur est comprise entre 50 et 90 m$^2$/g.

**4.** Catalyseur selon l'une des revendications précédentes, dans lequel la densité en métal du groupe VIB est comprise entre 7 et 25 atomes de métal du groupe VIB par nm$^2$ de catalyseur, de préférence comprise entre 7 et 20 atomes de métal du groupe VIB par nm$^2$ de catalyseur, de préférence comprise entre 7 et 15 atomes de métal du groupe VIB par nm$^2$ de catalyseur.

**5.** Catalyseur selon l'une des revendications précédentes, dans lequel le métal du groupe VIB est choisi parmi le tungstène et le molybdène et le métal du groupe VIII est choisi parmi le nickel et le cobalt.

**6.** Catalyseur selon la revendication 5, dans lequel le métal du groupe VIB est le molybdène et le métal du groupe VIII est le cobalt.

**7.** Catalyseur selon l'une des revendications précédentes, dans lequel le support à base d'alumine est obtenu à partir de gel d'alumine malaxé, mis en forme et calciné.

**8.** Catalyseur selon l'une des revendications précédentes, comprenant en outre au moins un composé organique contenant de l'oxygène et/ou de l'azote, le composé organique étant choisi parmi un acide carboxylique, un alcool, un aldéhyde, un ester, une amine, un acide carboxylique aminé, un alcool aminé, un nitrile et un amide.

**9.** Catalyseur selon la revendication 8, dans lequel le composé organique est choisi parmi l'éthylène glycol, le triéthylène glycol, le glycérol, le polyéthylène glycol ayant un poids moléculaire de 150 à 1500, l'acétophénone, le 2,4-pentanedione, le pentanole, l'acide acétique, l'acide maléique, l'acide oxalique, l'acide tartrique, l'acide formique, l'acide citrique, le succinate de dialkyl C1-C4, un oligosaccharide cyclique composé d'au moins 6 unités glucopyrannose liées en α (1-4), l'éthylène diamine, la tétraméthylurée, l'acide aminotriacétique, l'acide 1,2-cyclohexanediaminetétraacétique, la mono-éthanolamine, l'acétonitrile, la N-méthylpyrrolidone, le diméthylformamide et l'acide éthylène diamine tétraacétique.

**10.** Procédé de préparation d'un catalyseur selon l'une des revendications 1 à 7, comprenant les étapes suivantes:

  a) on dépose sur un support constitué d'alumine par une ou plusieurs imprégnations les métaux du groupe VIII, du groupe VIB et du phosphore de manière à obtenir un précurseur catalytique imprégné;
  b) on sèche le précurseur imprégné à une température inférieure à 200°C sans calcination ultérieure sous air à une température supérieure à 200°C de manière à fournir un catalyseur séché;
  c) on sulfure le catalyseur séché à l'étape b).

**11.** Procédé de préparation d'un catalyseur selon l'une des revendications 8 à 9, comprenant les étapes suivantes:

  i) on dépose sur un support constitué d'alumine par une ou plusieurs imprégnations les métaux du groupe VIII, du groupe VIB, du phosphore et au moins un composé organique contenant de l'oxygène et/ou de l'azote de manière à obtenir un précurseur catalytique imprégné;
  ii) on sèche le précurseur imprégné à une température inférieure à 200°C sans calcination ultérieure sous air à une température supérieure à 200°C de manière à fournir un catalyseur séché;
  iii) on sulfure le catalyseur séché à l'étape ii).

**12.** Procédé selon la revendication 11, dans lequel l'étape i) comprend les étapes successives suivantes:

  i1) on imprègne un support d'alumine par au moins une solution contenant au moins un métal du groupe VIB, au moins un métal du groupe VIII et le phosphore pour obtenir un support imprégné,
  i2) on sèche le support imprégné obtenu à l'étape i1) à une température inférieure à 200°C sans calcination ultérieure sous air pour obtenir un catalyseur séché,
  i3) on imprègne le catalyseur séché obtenu à l'étape i2) par une solution d'imprégnation comprenant au moins un composé organique contenant de l'oxygène et/ou de l'azote pour obtenir un précurseur de catalyseur additivé,
  i4) optionnellement on laisse maturer le précurseur de catalyseur additivé obtenu à l'étape i3).

**13.** Procédé d'hydrodésulfuration d'une coupe essence dans lequel on met en contact ladite coupe essence, de l'hydrogène et un catalyseur selon l'une des revendications 1 à 9, ledit catalyseur étant sulfuré et la mise en contact étant effectuée à :

• une température comprise entre 200 et 400°C;
• une pression totale comprise entre 1 et 3 MPa;
• une Vitesse Volumique Horaire, définie comme étant le débit volumique de charge rapporté au volume de catalyseur, comprise entre 1 et 10 h$^{-1}$;
• un rapport volumique hydrogène/charge essence compris entre 100 et 600 Nl/l.

**14.** Procédé selon la revendication 13, dans lequel l'essence est une essence issue d'une unité de craquage catalytique.

**Patentansprüche**

**1.** Katalysator zur Hydrobehandlung, umfassend einen Träger, der von Aluminiumoxid gebildet ist, mindestens ein Metall der Gruppe VIB, mindestens ein Metall der Gruppe VIII und Phosphor, bei dem:

• die spezifische Oberfläche des Katalysators zwischen 40 und 95 m$^2$/g beträgt,
• die Dichte an Metall der Gruppe VIB, ausgedrückt in Anzahl von Metallatomen der Gruppe VIB pro Oberflächeneinheit des Katalysators, zwischen 7 und 30 Metallatome der Gruppe VIB pro nm$^2$ Katalysator beträgt, wobei die Dichte an Metall der Gruppe VIB berechnet wird auf Basis des Verhältnisses

$$d \text{ (Metall der Gruppe VIB)} = \frac{(X \times N_A)}{(100 \times 10^{18} \times S \times M_M)}$$

wobei:

∘ X = % Metallgewicht der Gruppe VIB;
∘ N$_A$ = Avogadrozahl gleich 6,022.10$^{23}$,
o S = spezifische Oberfläche des Katalysators (m$^2$/g), gemessen nach der Norm ASTM D3663;
o M$_M$ = Molmasse des Metalls der Gruppe VIB;

• der Gehalt an Metall der Gruppe VIB zwischen 3 und 35 Gew.-% eines Oxids des Metalls der Gruppe VIB bezogen auf das Gesamtgewicht des Katalysators beträgt;
• der Gehalt an Metall der Gruppe VIII zwischen 0,1 und 10 Gew.-% eines Oxids des Metalls der Gruppe VIII bezogen auf das Gesamtgewicht des Katalysators beträgt;
• der Gehalt an Phosphor zwischen 0,3 und 10 Gew.-% P$_2$O$_5$ bezogen auf das Gesamtgewicht des Katalysators beträgt,

wobei der Katalysator durch Imprägnieren der Metalle der Gruppe VIB, der Gruppe VIII und des Phosphors auf dem Träger hergestellt wird, um eine imprägnierte katalytische Vorstufe zu erhalten, dann Trocknen der imprägnierten katalytischen Vorstufe bei einer Temperatur unter 200 °C und ohne späteres Kalzinieren unter Luft bei einer Temperatur über 200 °C, wobei der Katalysator nach dem Trocknen sulfidiert wird.

**2.** Katalysator nach Anspruch 1, bei dem das Molverhältnis (Metall der Gruppe VIII)/(Metall der Gruppe VIB) zwischen 0,1 und 0,8 und das Molverhältnis Phosphor/(Metall der Gruppe VIB) zwischen 0,1 und 0,7 beträgt.

**3.** Katalysator nach einem der vorhergehenden Ansprüche, wobei die spezifische Oberfläche des Katalysators zwischen 50 und 90 m$^2$/g beträgt.

**4.** Katalysator nach einem der vorhergehenden Ansprüche, bei dem die Dichte an Metall der Gruppe VIB zwischen 7 und 25 Atome eines Metalls der Gruppe VIB pro nm$^2$ Katalysator beträgt, vorzugsweise zwischen 7 und 20 Atome eines Metalls der Gruppe VIB pro nm$^2$ Katalysator, vorzugsweise zwischen 7 und 15 Atome eines Metalls der Gruppe VIB pro nm$^2$ Katalysator.

**5.** Katalysator nach einem der vorhergehenden Ansprüche, bei dem das Metalls der Gruppe VIB unter Wolfram und Molybdän und das Metall der Gruppe VIII unter Nickel und Kobalt ausgewählt ist.

6. Katalysator nach Anspruch 5, bei dem das Metall der Gruppe VIB Molybdän und das Metall der Gruppe VIII Kobalt ist.

7. Katalysator nach einem der vorhergehenden Ansprüche, bei dem der Träger auf Basis von Aluminiumoxid aus geknetetem, geformtem und kalziniertem Aluminiumoxidgel hergestellt ist.

8. Katalysator nach einem der vorhergehenden Ansprüche, ferner umfassend mindestens eine organische Verbindung, die Sauerstoff und/oder Stickstoff enthält, wobei die organische Verbindung ausgewählt ist unter einer Carboxylsäure, einem Alkohol, einem Aldehyd, einem Ester, einem Amin, einer Amincarboxylsäure, einem Aminalkohol, einem Nitril und einem Amid.

9. Katalysator nach Anspruch 8, bei dem die organische Verbindung ausgewählt ist unter Glycolethylen, Glycoltriethylen, Glycerol, Glycolpolyethylen mit einem Molekulargewicht von 150 bis 1500, Acetophenon, 2,4-Pentandion, Pentanol, Essigsäure, Maleinsäure, Oxalsäure, Weinsäure, Ameisensäure, Zitronensäure, Dialkylsuccinat C1-C4, einem zyklischen Oligosacchharid, bestehend aus mindestens 6 Einheiten Glucopyrannose, gebunden bei $\alpha$ (1-4), Ethylendiamin, Tetramethylharnstoff, Aminotriessigsäure, 1,2-Cyclohexandiamintetraessigsäure, Monoethanolamin, Acetonitril, N-Methylpyrrolidon, Dimethylformamid und Ethylendiamintetraessigsäure.

10. Verfahren zur Herstellung eines Katalysators nach einem der Ansprüche 1 bis 7, umfassend die folgenden Schritte:

   a) Aufbringen auf einen von Aluminiumoxid gebildeten Träger der Metalle der Gruppe VIII, der Gruppe VIB und des Phosphors durch eine oder mehrere Imprägnierungen, um eine imprägnierte katalytische Vorstufe zu erhalten;
   b) Trocknen der imprägnierten Vorstufe bei einer Temperatur unter 200 °C ohne späteres Kalzinieren unter Luft bei einer Temperatur über 200 °C, um einen getrockneten Katalysator zu liefern;
   c) Sulfidieren des in Schritt b) getrockneten Katalysators.

11. Verfahren zur Herstellung eines Katalysators nach einem der Ansprüche 8 bis 9, umfassend die folgenden Schritte:

   i) Aufbringen auf einen von Aluminiumoxid gebildeten Träger der Metalle der Gruppe VIII, der Gruppe VIB und des Phosphors und mindestens einer organischen Verbindung, die Sauerstoff und/oder Stickstoff enthält, durch eine oder mehrere Imprägnierungen, um eine imprägnierte katalytische Vorstufe zu erhalten;
   ii) Trocknen der imprägnierten Vorstufe bei einer Temperatur unter 200 °C ohne späteres Kalzinieren unter Luft bei einer Temperatur über 200 °C, um einen getrockneten Katalysator zu liefern;
   iii) Sulfidieren des in Schritt ii) getrockneten Katalysators.

12. Verfahren nach Anspruch 11, bei dem der Schritt i) die folgenden Schritte hintereinander umfasst:

   i1) Imprägnieren eines Aluminiumoxidträgers mit mindestens einer Lösung, die mindestens ein Metall der Gruppe VIB, mindestens ein Metall der Gruppe VIII und Phosphors enthält, um einen imprägnierten Träger zu erhalten;
   i2) Trocknen des in Schritt i1) erhaltenen imprägnierten Trägers bei einer Temperatur unter 200 °C ohne späteres Kalzinieren unter Luft, um einen getrockneten Katalysator zu erhalten;
   i3) Imprägnieren des in Schritt i2) erhaltenen getrockneten Katalysators mit einer Imprägnierlösung, umfassend mindestens eine organische Verbindung, die Sauerstoff und/oder Stickstoff enthält, um eine additivierte Katalysatorvorstufe zu erhalten,
   i4) optional Reifenlassen der in Schritt i3) erhaltenen additivierten Katalysatorvorstufe.

13. Verfahren zur Hydrodesulfurierung einer Benzinfraktion, bei dem die Benzinfraktion, Wasserstoff und ein Katalysator nach einem der Ansprüche 1 bis 9 in Kontakt gebracht werden, wobei der Katalysator sulfuriert wird, und die Kontaktnahme durchgeführt wird bei:

   • einer Temperatur zwischen 200 und 400 °C;
   • einem Gesamtdruck zwischen 1 und 3 MPa;
   • einer volumenbezogenen Stundengeschwindigkeit, definiert als der volumenbezogene Durchsatz einer Charge, bezogen auf das Volumen eines Katalysators, zwischen 1 und 10 h$^{-1}$;
   • einem Volumenverhältnis Wasserstoff/Benzinfraktion zwischen 100 und 600 Nl/l.

**14.** Verfahren nach Anspruch 13, bei dem das Benzin ein Benzin ist, das aus einem katalytischen Cracken stammt.

**Claims**

**1.** A hydrotreatment catalyst comprising a support consisting of alumina, at least one metal from group VIB, at least one metal from group VIII and phosphorus, in which:

• the specific surface area of the catalyst is in the range 40 to 95 $m^2/g$; the density of the metal from group VIB, expressed as the number of atoms of metal from group VIB per unit surface area of catalyst, is in the range 7 to 30 atoms of metal from group VIB per $nm^2$ of catalyst; the density of the metal from group VIB is calculated from the following relationship:

$$d \, (\text{metal from group VIB}) = \frac{(X \times N_A)}{(100 \times 10^{18} \times S \times M_M)}$$

in which :

◦ X = % by weight of metal from group VIB;
◦ $N_A$ = Avogadro's number, equal to 6.022 x $10^{23}$;
◦ S = specific surface area of catalyst ($m^2/g$), measured in accordance with the standard ASTM D3663 ;
◦ $M_M$ = molar mass of metal from group VIB;

• the content of the metal from group VIB is in the range 3% to 35% by weight of oxide of said metal from group VIB with respect to the total catalyst weight;
• the content of the metal from group VIII is in the range 0.1% to 10% by weight of oxide of said metal from group VIII with respect to the total catalyst weight;
• the phosphorus content is in the range 0.3% to 10% by weight of $P_2O_5$ with respect to the total catalyst weight,

the catalyst being prepared by impregnation of the metals from group VIB, group VIII and phosphorus onto the support in order to obtain an impregnated catalyst precursor, then drying said impregnated catalyst precursor at a temperature of less than 200°C and without subsequent calcining under air at a temperature above 200 °C and said catalyst is sulphurized after drying.

**2.** The catalyst according to claim 1, in which the (metal from group VIII)/(metal from group VIB) molar ratio is in the range 0.1 to 0.8 and the phosphorus/(metal from group VIB) molar ratio is in the range 0.1 to 0.7.

**3.** The catalyst according to one of the preceding claims, in which the specific surface area of the catalyst is in the range 50 to 90 $m^2/g$.

**4.** The catalyst according to one of the preceding claims, in which the density of the metal from group VIB is in the range 7 to 25 atoms of metal from group VIB per $nm^2$ of catalyst, preferably in the range 7 to 20 atoms of metal from group VIB per $nm^2$ of catalyst, more preferably in the range 7 to 15 atoms of metal from group VIB per $nm^2$ of catalyst.

**5.** The catalyst according to one of the preceding claims, in which the metal from group VIB is selected from tungsten and molybdenum and the metal from group VIII is selected from nickel and cobalt.

**6.** The catalyst according to claim 5, in which the metal from group VIB is molybdenum and the metal from group VIII is cobalt.

**7.** The catalyst according to one of the preceding claims, in which the alumina-based support is obtained from an alumina gel which has been kneaded, shaped and calcined.

**8.** The catalyst according to one of the preceding claims, further comprising at least one organic compound containing oxygen and/or nitrogen, said organic compound being selected from a carboxylic acid, an alcohol, an aldehyde, an ester, an amine, an aminocarboxylic acid, an aminoalcohol, a nitrile and an amide.

9.	The catalyst according to claim 8, in which the organic compound is selected from ethylene glycol, triethylene glycol, glycerol, polyethylene glycol with a molecular weight of 150 to 1500, acetophenone, 2,4-pentanedione, pentanol, acetic acid, maleic acid, oxalic acid, tartaric acid, formic acid, citric acid, a $C_1$-$C_4$ dialkyl succinate, a cyclic oligosaccharide composed of at least 6 $\alpha$(1-4)-linked glucopyranose units, ethylene diamine, tetramethylurea, aminotriacetic acid, 1,2-cyclohexane diamine tetraacetic acid, mono-ethanolamine, acetonitrile, N-methylpyrrolidone, dimethylformamide and ethylene diamine tetraacetic acid.

10.	A process for the preparation of a catalyst according to one of claims 1 to 7, comprising the following steps:

>	a) depositing the metals from group VIII, group VIB and phosphorus onto a support consisting of alumina in one or more impregnation steps in order to obtain an impregnated catalyst precursor;
>	b) drying the impregnated precursor at a temperature below 200°C without subsequent calcining under air at a temperature above 200 °C in order to provide a dried catalyst;
>	c) sulphurizing the dried catalyst of step b).

11.	The process for the preparation of a catalyst according to one of claims 8 to 9, comprising the following steps:

>	i) depositing the metals from group VIII, group VIB, phosphorus and at least one organic compound containing oxygen and/or nitrogen onto a support consisting of alumina in one or more impregnation steps in order to obtain an impregnated catalyst precursor;
>	ii) drying the impregnated precursor at a temperature below 200°C without subsequent calcining under air at a temperature above 200 °C in order to provide a dry catalyst,
>	iii) sulphurizing the dried catalyst of step ii).

12.	The process according to claim 11, in which step i) comprises the following steps in succession:

>	i1) impregnating an alumina support with at least one solution containing at least one metal from group VIB, at least one metal from group VIII and phosphorus in order to obtain an impregnated support;
>	i2) drying the impregnated support obtained in step i1) at a temperature below 200°C without subsequent calcining under air in order to obtain a dry catalyst;
>	i3) impregnating the dry catalyst obtained in step i2) with an impregnation solution comprising at least one organic compound containing oxygen and/or nitrogen in order to obtain a doped catalyst precursor;
>	i4) optionally, allowing the doped catalyst precursor obtained in step i3) to mature.

13.	A process for the hydrodesulphurization of a gasoline cut in which said gasoline cut, hydrogen and a catalyst according to one of claims 1 to 9 are brought into contact, said catalyst being sulphurized and contact being carried out at:

>	• a temperature in the range 200°C to 400°C;
>	• a total pressure in the range 1 to 3 MPa;
>	• an hourly space velocity, defined as the volume flow rate of feed with respect to the volume of catalyst, in the range 1 to 10 h$^{-1}$;
>	• a hydrogen/gasoline feed volume ratio in the range 100 to 600 NL/L.

14.	The process according to claim 13, in which the gasoline is a gasoline obtained from a catalytic cracking unit.

EP 2 962 753 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5318690 A
- WO 0140409 A
- US 5968346 A
- US 2009321320 A
- EP 1892039 A
- WO 2011080407 A1
- WO 2007084437 A1
- WO 2014013154 A1
- EP 0387109 A

**Littérature non-brevet citée dans la description**

- **ROUQUEROL F. ; ROUQUEROL J. ; SINGH K.** Adsorption by Powders & Porous Solids: Principle, methodology and applications. Academic Press, 1999
- **P. EUZEN ; P. RAYBAUD ; X. KROKIDIS ; H. TOULHOAT ; J.L. LE LOARER ; J.P. JOLIVET ; C. FROIDEFOND.** Alumina, in Handbook of Porous Solids. Wiley-VCH, 2002, 1591-1677